# EUROPEAN PATENT APPLICATION

(11) **EP 4 318 693 A1**
(43) Date of publication of application: **07.02.2024**
(21) Application number: 21934675.6
(22) Date of filing: 16.12.2021
(51) Int. Cl.: H01M 8/1018

(54) **COMPOSITE MEMBRANE OF SPECIAL HIGHLY-ENHANCED FLUORINE-CONTAINING PROTON OR ION EXCHANGE MEMBRANE, COMPOSITE MEMBRANE ELECTRODE, SPECIAL HIGHLY-ENHANCED FLUORINE-CONTAINING CHLOR-ALKALI BATTERY MEMBRANE, SPECIAL RELEASE MEMBRANE, AND PREPARATION METHOD THEREFOR**

(30) Priority: 29.03.2021 CN 202110337002; 29.03.2021 CN 202110337061; 29.03.2021 CN 202110331385; 29.03.2021 CN 202110337022; 29.03.2021 CN 202110337004
(71) Applicant: Zhejiang Hyproof New Energy Co. Ltd, Jiaxing, Zhejiang 314199 (CN); Shanghai Hyproof Technology Co., Ltd., Shanghai 201422 (CN); Shanghai Hyproof New Material Technology Co., Ltd., Shanghai 201401 (CN)
(72) Inventor: WU, Huisheng, Shanghai 201401 (CN); YANG, Ying, Shanghai 201401 (CN)
(74) Representative: Bayramoglu et al.
(86) International application number: PCT/CN2021/138855
(87) International publication number: WO 2022/206039

(57) **Abstract**

The invention discloses a composite membrane of a special highly enhanced fluorine-containing proton or ion exchange membrane, a composite membrane electrode, a special highly enhanced fluorine-containing chlor-alkali battery membrane, a special release membrane and a preparation method thereof. The composite membrane of the special highly enhanced fluorine-containing proton or ion exchange membrane comprises at least two layers of microporous reinforced membranes, wherein both sides of each layer of microporous reinforced membranes are filled with a fluorine-containing proton or ion exchange resin, the biaxial tensile strength of the composite membrane is greater than 40MPa, the room temperature ionic conductivity is greater than 0.007S/cm, the air permeability is extremely low, and the time required for 100 ml of air to pass through the composite membrane measured by Gurley densometer is more than 5 minutes.

## Description

### FIELD OF THE INVENTION

The invention relates to a composite membrane of a special highly enhanced fluorine-containing proton or ion exchange membrane, a composite membrane electrode, a special highly enhanced fluorine-containing chlor-alkali battery membrane, a special release membrane and a preparation method thereof.

### BACKGROUND OF THE INVENTION

Proton exchange membrane fuel cell (PEMFC), as a high-efficiency power generation device that can directly convert fuel and chemical energy into electrical energy, has attracted widespread attention from various industries because of its advantages such as high energy conversion rate, environmental friendliness, low-temperature start-up, and low noise compared with traditional batteries. Its core component is a proton exchange membrane which is located in the center of the fuel cell and provides a channel for the protons generated by the cathode to be transported to the anode. At present, the most widely used proton exchange membranes in the market are still the earliest commercialized perfluoro sulfonic acid Nafion series membranes (more than 25 microns thickness) from DuPont of the United States, which are mainly obtained by melt extrusion, calendering and stretching. Recently, the Gore-Select membrane series of Gore Company of the United States uses ultra-thin (less than 25 microns thickness) single-layer microporous PTFE-enhanced membrane, which is mainly obtained by cast coating a single-layer microporous PTFE enhanced membrane (see US Patent No. US5547551A, US5599614A), and a few domestic companies are imitating it.

The molecular structure of the fluorine-containing sulfonic acid resin is composed of a fluorocarbon main chain and a branched chain with a sulfonic acid group at the end. The main chain of the fluorocarbon bond has a small degree of polarization, and the hydrophilic sulfonic acid or carboxylic acid group on the branched chain can absorb water molecules. Due to the strong polarity difference between the hydrophobic main chain and the hydrophilic branched chain, a microscopic phase separation structure is formed inside the membrane. This structure plays an important role in its mechanical properties and transport performance. Therefore, the perfluorosulfonic acid resin membrane has basic properties such as excellent proton conductivity, low gas permeability, good mechanical properties and dimensional stability, and small contact resistance within the catalytic layer, which meets the conditions for application as a proton exchange membrane. There are many methods for preparing proton exchange membranes by using sulfonic acid resin solution, for example: cast coating method, immersion method, spraying method and so on. At present, the preparation process of proton exchange membranes and various reinforced composite proton exchange membranes is complicated and difficult to achieve continuous production.

Patent CN101771159B (Patent No. ZL201010104002.7) disclosed a method for preparing a proton exchange membrane. The method adopted that sulfonated polyetheretherketone and sulfonated polyethersulfone are mixed to form a membrane solution, and the membrane solution is poured into a mold to evaporate the solvent to form a membrane, and then the proton exchange membrane is obtained by vacuum drying and acid treatment. The preparation of the finished membrane is carried out unit by unit, which has low production efficiency and high production cost.

Patent CN100513460 (Patent No. ZL200710011141.3) disclosed a new type of proton exchange membrane molding process. This method used a single-layer expanded polytetrafluoroethylene microporous membrane as a base membrane, which is first immersed in a low-concentration resin solution, and then repeatedly immersed in a high-concentration resin solution until a suitable membrane thickness is reached. The production process of this method is complicated, low in efficiency, and the production and use of fuel cells are expensive, which limits the commercialization of fuel cells.

Patent CN106968110B (ZL201710251603.2) disclosed a fluorine-containing chlorine-containing conductive polymer double-sided filled composite membrane, however, the membrane production method uses release paper, which is easy to produce dander pollution caused by the release paper when producing high-quality membranes.

The release membrane refers to a membrane with a separable surface. The release membrane is not sticky or slightly sticky after being in contact with a specific material under limited conditions. Usually, in order to increase the release force of the plastic membrane, the plastic membrane is treated with corona or plasma, and then the surface is modified with a release agent. The most common is to apply a silicon-containing release agent or a fluorine-containing release agent on the surface of the membrane material, so that it can exhibit extremely light and stable release force for various organic glues. At present, silicone release paper (membrane) is common in the market, all of which use silicone as a release agent and the biggest disadvantage is silicone residue on the surface of the product when it is peeled off.

Polycarbonate insulating release membrane is also a common type of release membrane. Its component is 2,2'-bis(4-hydroxyphenyl) propane polycarbonate, commonly known as polycarbonate, which is a high molecular polymer containing bisphenol A polycondensed carbonate group in its molecular chain. It is an amorphous, odorless, non-toxic, highly transparent colorless or slightly yellow thermoplastic engineering plastic with excellent physical and mechanical properties, especially excellent impact resistance, high tensile strength, bending strength and compression strength; small creep and stable dimensions. Therefore, it is widely used in various fields. But the polycarbonate insulating release membrane needs to add other auxiliary agent or coat the release agent to work.

Patent CN105440641A disclosed a polycarbonate insulating release membrane, which requires the addition of other auxiliary agents. These auxiliary agents are likely to be released during the cast coating process and cause membrane surface pollution.

Patent CN1840324A disclosed a manufacturing method of a release membrane, which is complicated in process and needs to be coated with a release agent, which is easily released during the casting process and causes membrane surface pollution.

Another example is patent CN100588676C (Patent No. 200710013624.7), US7259208B, CN101350415B, CN101780376B, CN104018181A, CN101320818B, CN201546122U, CN103187549A, CN12988 90C and other disclosed technologies, the fluoropolymer microfibers are not in a continuous phase and cannot be connected to form a membrane.

With the development of low-carbon and green economy, the requirements or uses of fluorine-containing proton exchange membranes or ion exchange membranes and their supporting release membranes are getting higher and higher. In practice, release membranes are not only required to have the function of isolation and filling, but also required protection, the release agent does not pollute the cast coating materials and has the effect of heat dissipation; the cleanliness, mechanical strength and service life requirements of the fluorine-containing proton exchange membrane or ion exchange membrane are becoming more and more important.

### SUMMARY OF THE INVENTION

Due to the above-mentioned technical problems in the prior art, the present invention aims to propose a composite membrane of a special highly enhanced fluorine-containing proton or ion exchange membrane, a composite membrane electrode or a special highly enhanced fluorine-containing chlor-alkali battery membrane so as to overcome the problems in the prior art that the preparation process of the exchange membrane is complex, easily polluted by a release agent, and difficult to produce continuously.

In order to achieve the above technical purpose, the present invention adopts the following technical solutions:
In a first aspect of the invention:
The first aspect of the present invention provides a composite membrane of a special highly enhanced fluorine-containing proton or ion exchange membrane, comprising at least two layers of microporous reinforced membranes, wherein both sides of each layer of microporous reinforced membranes are filled with fluorine-containing proton or ion exchange resin, and the weight ratio of the microporous reinforced membranes to fluorine-containing proton or ion exchange resin is 5:95 to 40:60; the thickness of the composite membrane is 1 micron to 300 microns; the biaxial tensile strength of the composite membrane is greater than 40MPa, its room temperature ion conductivity is greater than 0.007S/cm, the air permeability is extremely low, and the time required for 100 milliliters of air to pass through the composite membrane measured by Gurley densometer is more than 5 minutes.

Preferably, the weight ratio of the microporous reinforced membranes to fluorine-containing proton or ion exchange resin is 10:90 to 30:70; further comprising a special release membrane, the special release membrane is attached to the bottom layer of the composite membrane, the composition of the special release membrane is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; wherein the engineering plastics containing hexa-fluoro-dimethyl bisphenol A as the main component is a polymer obtained by polymerization or copolymerization of hexa-fluoro-dimethyl bisphenol A, and its weight ratio is greater than 50%.

Preferably, the microporous reinforced membrane has 2 to 50 layers.

Preferably, the microporous reinforced membrane has 2 to 30 layers.

Preferably, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

Preferably, a dry weight of the microporous reinforced membrane is 0.5 to 30 g/m², an open porosity is 40% to 95%, a thickness is 0.5 to 30 microns, and a biaxial tensile strength is greater than 40 MPa.

Preferably, the preparation method of the microporous reinforced membrane is:
melt spraying, wet spraying, wet phase change method, temperature difference phase change method, dry solvent method, electrospinning method or ultra-high-speed centrifugal spinning method are used for spraying, and nanometer or micron-sized fibers are evenly collected to form a random web microporous structure, which is annealed to form a microporous membrane, the resin used is thermoplastic fluorine-containing or chlorine-containing resin, carbon fiber precursor or resin that can be derived into carbon fiber; the microporous membrane is extruded in paste form and biaxially stretched.

Preferably, in a solution of the fluorine-containing proton exchange resin or ion exchange resin, one or more kinds of metal nanopowder, metal oxide nanopowder, carbon powder, graphite powder, graphene, rare metal powder are mixed, the total weight of which does not exceed 80% of the dry weight of the fluorine-containing proton exchange resin or ion exchange resin.

Preferably, the metal nanopowder comprises one of silver, platinum, palladium, or a platinum/carbon composite material, the metal oxide powder comprises one of zirconium dioxide or ceria.

Preferably, the total weight of the composite membrane is 2 to 500 g/m².

In a second aspect of the invention:
The second aspect of the present invention provides a composite membrane electrode of a special highly enhanced fluorine-containing proton or ion exchange membrane, being applied to a battery diaphragm, comprising at least two layers of microporous reinforced membranes, wherein both sides of each layer of microporous reinforced membranes are filled with fluorine-containing proton or ion exchange resin, and a weight ratio of the microporous reinforced membrane to fluorine-containing proton or ion exchange resin is 5:95 to 40:60; the weight ratio of the microporous reinforced membrane to fluorine-containing protons or ion exchange resin is 10:90 to 30:70; the special highly enhanced fluorine-containing proton or ion exchange membrane electrode has a total weight of 2 to 500 g/m², and a thickness of 1 micron to 300 microns; the biaxial tensile strength of the composite membrane electrode of the special highly enhanced fluorine-containing proton or ion exchange membrane is greater than 40 MPa, its room temperature ion conductivity is greater than 0.007 S/cm, the air permeability is extremely low, and the time required for 100 milliliters of air to pass through the composite membrane electrode measured by Gurley densometer is more than 5 minutes.

Preferably, comprising a special release membrane, the special release membrane is attached to the bottom layer of the composite membrane, the composition of the special release membrane is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; the engineering plastics containing hexa-fluoro-dimethyl bisphenol A as the main component is a polymer obtained by polymerization or copolymerization of hexa-fluoro-dimethyl bisphenol A, and its weight ratio is greater than 50%.

Preferably, the weight ratio of the microporous reinforced membranes to fluorine-containing proton or ion exchange resin is 10:90 to 30:70.

Preferably, the microporous reinforced membrane has 2 to 50 layers.

Preferably, the microporous reinforced membrane has 2 to 30 layers.

Preferably, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

Preferably, the dry weight of the microporous reinforced membrane is 0.5 to 30 g/m², an open porosity is 40% to 95%, a thickness is 0.5 to 30 microns, and the biaxial tensile strength is greater than 40 MPa.

Preferably, the preparation method of the microporous reinforced membrane is: melt spraying, wet spraying, wet phase change method, temperature difference phase change method, dry solvent method, electrospinning method or ultra-high-speed centrifugal spinning method are used for spraying, and nanometer or micron-sized fibers are evenly collected to form a random web microporous structure, which is annealed to form a microporous membrane, the resin used is thermoplastic fluorine-containing or chlorine-containing resin, carbon fiber precursor or resin that can be derived into carbon fiber; the microporous membrane is extruded in paste form and biaxially stretched.

Preferably, in a solution of the fluorine-containing proton exchange resin or ion exchange resin, one or more kinds of metal nanopowder, metal oxide nanopowder, carbon powder, graphite powder, graphene, rare metal powder are mixed, the total weight of which does not exceed 80% of the dry weight of the fluorine-containing proton exchange resin or ion exchange resin.

Preferably, the metal nanopowder comprises one of silver, platinum, palladium, or a platinum/carbon composite material, the metal oxide powder comprises one of zirconium dioxide or ceria.

Preferably, the microporous reinforced membrane has 2 to 20 layers.

In a third aspect of the invention:
The third aspect of the present invention provides a special highly enhanced fluorine-containing chlor-alkali battery membrane, comprising at least two layers of microporous reinforced membranes, both sides of each layer of microporous reinforced membranes are filled with fluorine-containing proton exchange resin or ion exchange resin, the weight ratio of the microporous reinforced membranes to fluorine-containing proton exchange resin or ion exchange resin is 5:95 to 40:60; the special highly enhanced fluorine-containing chlor-alkali battery membrane has a total weight of 20 to 500 g/m², and a thickness of 10 micron to 260 microns; the biaxial tensile strength of highly enhanced fluorine-containing chlor-alkali battery membrane is greater than 40MPa, the room temperature ionic conductivity of the highly enhanced fluorine-containing chlor-alkali battery membrane is greater than 0.007S/cm, the air permeability rate of the highly enhanced fluorine-containing chlor-alkali battery membrane is measured by Gurley densometer, and the time required for 100 milliliters of air to pass through the composite membrane is more than 5 minutes.

Preferably, the weight ratio of the microporous reinforced membranes to fluorine-containing proton or ion exchange resin is 10:90 to 30:70.

Preferably, the microporous reinforced membrane has 2 to 50 layers.

Preferably, the microporous reinforced membrane has 2 to 30 layers.

Preferably, further comprising a special release membrane, the special release membrane is attached to the bottom layer of the composite membrane, the composition of the special release membrane is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; the engineering plastics containing hexa-fluoro-dimethyl bisphenol A as the main component is a polymer obtained by polymerization or copolymerization of hexa-fluoro-dimethyl bisphenol A, and its weight ratio is greater than 50%.

Preferably, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

Preferably, the dry weight of the microporous reinforced membrane is 0.5 to 30 g/m², an open porosity is 40% to 95%, a thickness is 0.5 to 30 microns, and a biaxial tensile strength is greater than 40 MPa.

Preferably, the preparation method and materials of the microporous reinforced membrane are selected from one of the following:
①melt spraying, wet spraying, wet phase change method, temperature difference phase change method, dry solvent method, electrospinning method or ultra-high-speed centrifugal spinning method are used for spraying, and nanometer or micron-sized fibers are evenly collected to form a random web microporous structure, which is annealed to form a microporous thin membrane, the resin used is thermoplastic fluorine-containing or chlorine-containing resin, carbon fiber precursor or resin that can be derived into carbon fiber;
②the microporous membrane is extruded in paste form and biaxially stretched to obtain an expanded microporous polytetrafluoroethylene membrane, or a microporous polyolefin membrane or a modified polyolefin membrane.

Preferably, in a solution of the fluorine-containing proton exchange resin or ion exchange resin, one or more kinds of metal nanopowder, metal oxide nanopowder, carbon powder, graphite powder, graphene, rare metal powder are mixed, the total weight of which does not exceed 80% of the dry weight of the fluorine-containing proton exchange resin or ion exchange resin.

Preferably, the acid equivalent weight of the fluorine-containing proton exchange resin or ion exchange resin is 400-1500, the fluorine-containing proton exchange resin or ion exchange resin are selected from fluorine-containing sulfonic acid resin and fluorine-containing carboxylic acid resin; the perfluorocarboxylic acid resin: the dry weight ratio of the perfluorosulfonic acid resin filled in the special highly enhanced fluorine-containing chlor-alkali battery membrane is 1:9 to 5:5.

In a fourth aspect of the invention:
The fourth aspect of the invention provides a preparation method of a special highly enhanced fluorine-containing membrane or electrode, the preparation method can be used for preparing the composite membrane of the special highly enhanced fluorine-containing proton or ion exchange membrane as described in the first aspect of the present invention, the composite membrane electrode described in the second aspect or the fluorine-containing chlor-alkali battery membrane described in the third aspect of the present invention, which includes:
Step 1, cast coating one side of a special release membrane with a fluorine-containing proton exchange resin solution or a fluorine-containing ion exchange resin solution for impregnating;
step 2, covering the coated resin solution with a microporous reinforced membrane, so that the coated resin solution on the release membrane is fully impregnated with the coated microporous reinforced membrane to obtain a composite membrane;
step 3, drying the composite membrane obtained in step 2;
step 4, cast coating the resin solution on the upper surface of the microporous reinforced membrane of the composite membrane, so that the cast coated resin solution is fully impregnated with the coated microporous reinforced membrane to obtain a composite membrane;
step 5, drying the composite membrane obtained in step 4.

Preferably, cast coating the resin solution on the microporous reinforced membrane of the composite membrane obtained in step 2, allowing the upper and lower sides of the microporous reinforced membrane to be fully impregnated and filled with the resin solution to form a composite thin membrane, and then drying all the materials at one time.

Preferably, on the composite membrane obtained in step 4, repeat step 2, step 3 and step 4 at least once.

Preferably, the pore volume of the microporous reinforced membrane filled by the fluorine-containing proton exchange resin solution, or the fluorine-containing ion exchange resin solution is at least 60%-90%.

Preferably, the pore volume of the microporous reinforced membrane filled by the fluorine-containing proton exchange resin solution, or the fluorine-containing ion exchange resin solution is at least 80%.

Preferably, the dry weight ratio of the microporous reinforced membranes to fluorine-containing proton exchange resin or ion exchange resin is 5:95 to 40:60.

Preferably, the dry weight ratio of the microporous reinforced membranes to fluorine-containing proton exchange resin or ion exchange resin is 10:90~30:70.

Preferably, the composition of the special release membrane is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; the engineering plastics containing hexa-fluoro-dimethyl bisphenol A as the main component is a polymer obtained by polymerization or copolymerization of hexa-fluoro-dimethyl bisphenol A, and its weight ratio is greater than 50%.

Preferably, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

Preferably, in a solution of the fluorine-containing proton exchange resin or ion exchange resin, one or more kinds of metal nanopowder, metal oxide nanopowder, carbon powder, graphite powder, graphene, rare metal powder are mixed, the total weight of which does not exceed 80% of the dry weight of the fluorine-containing proton exchange resin or ion exchange resin.

In a fifth aspect of the invention:
the fifth aspect of the invention provides a special release membrane without a release agent, the special release membrane without a release agent is applied to the casting method to prepare battery diaphram; the component of the special release membrane without a release agent is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; the engineering plastics containing hexa-fluoro-dimethyl bisphenol A as the main component is a polymer obtained by polymerization or copolymerization with hexa-fluoro-dimethyl bisphenol A, and its weight ratio is greater than 50%.

Preferably, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

Preferably, the special release membrane without a release agent has a thickness of 10 to 500 microns, a width of at least 100 mm, and is heat-resistant at 100°C without deformation.

Preferably, the special release membrane without a release agent has a thickness of 25 to 300 microns.

In addition, the above-mentioned special release membrane without a release agent is applied to the casting method to prepare battery diaphragm.

Due to the adoption of the above technical solutions, the composite membrane of the special highly enhanced fluorine-containing proton or ion exchange membrane, the composite membrane electrode and fluorine-containing chlor-alkali battery membrane of the present invention are not troubled by release agent pollution, can be heat-treated multiple times, and can be heat-resistant at least 100°C; the multi-layer microporous reinforced membrane can cover the lack of air bubbles that may be formed in a single coating membrane, and the yield can be greatly improved. The tensile strength of the composite membrane, the composite membrane electrode and fluorine-containing chlor-alkali battery membrane can also be increased; the dimensional stability of the composite membrane, the composite membrane electrode and fluorine-containing chlor-alkali battery membrane can also be improved; it is extremely important to the service life, it can achieve a high-speed continuous production and meet the requirements of commercial batch production. The obtained product membrane has high cleanliness and stability.

The preparation method of the composite membrane, the composite membrane electrode and fluorine-containing chlor-alkali battery membrane of the present invention is simple in process, can reduce production cost, and more importantly, avoids the problem that the release membrane contains a small amount of free release agent, so that the qualified rate of the final product is greatly increased.

The special release membrane without a release agent of the present invention can have a release function without corona or coating a release agent, can be used in continuous production, has simplified production steps and can reduce production costs.

### DETAILED DESCRIPTION OF THE INVENTION

The present invention will be further described below, and it should be noted that the examples are based on the technical solutions and provides detailed implementation and specific operation process, but the protection scope of the present invention is not limited to the embodiment.
(1) A composite membrane of a special highly enhanced fluorine-containing proton or ion exchange membrane, a composite membrane electrode, or fluorine-containing chlor-alkali battery membrane, comprises at least two layers of microporous reinforced membranes, both sides of each layer of microporous reinforced membranes (continuous phase) are filled with fluorine-containing proton or ion exchange resin; (2) A special release membrane is attached to the lower surface of a composite membrane of a special highly enhanced fluorine-containing proton or ion exchange membrane, a composite membrane electrode, or fluorine-containing chlor-alkali battery membrane.

The fluorine-containing proton exchange resin or ion exchange resin can be commercialized products, such as products of DuPont Chemours Nafion, 3M or Solvay, or it can be prepared by referring to the preparation method of a fluorine-containing chlorine-containing conductive polymer resin disclosed in patent CN106947027B (Patent No. ZL201710251598.5).

The above mentioned enhanced composite membrane, composite membrane electrode, or fluorine-containing chlor-alkali battery membrane comprises at least two layers of microporous reinforced membranes, both sides of each layer of microporous reinforced membranes (continuous phase) are filled with fluorine-containing proton or ion exchange resin, the overall preparation method includes the following steps:
[Preparation method of microporous reinforced membrane] The production process of the microporous reinforced membrane and manufacturing process of materials and materials can be selected from the following two categories:
(1) melt spraying, wet spraying, wet phase change method, temperature difference phase change method, dry solvent method, electrospinning method or ultra-high-speed centrifugal spinning method are used for spraying, and nanometer or micron-sized fibers are evenly collected to form a random web microporous structure, which is annealed to form a microporous membrane, the preferred resin used is thermoplastic fluorine-containing or chlorine-containing resin, carbon fiber precursor or resin that can be derived into carbon fiber such as polyacrylonitrile (PAN) or its copolymers, polyimide, polyamide (nylon), polyester (PET), aramid, polyether ketone (PEEK), etc.
(2) the microporous membrane is obtained by extrusion in paste form and biaxial stretch (such as expanded microporous polytetrafluoroethylene membrane, or microporous polyolefin membrane (polyethylene, polypropylene, etc.), modified polyolefin membrane).

Microporous reinforced membrane, its biaxial tensile strength (refer to ASTM D882 test method) (TD, MD) should be greater than 40MPa, preferably greater than 50MPa, most preferably greater than 80MPa, and the porosity is 40% to 95%. The microporous reinforced membrane has a reticular microporous structure, and the reticulated microporous structure can be formed into a continuous phase microporous reinforced membrane after being annealed. The dry weight of the microporous reinforced membrane is about 0.5 to 30 g/m², preferably 1 to 10 g/m², the open porosity is about 40% to 95%, preferably 50% to 90%, and the thickness is 0.5 to 30 microns, preferably 1 to 15 microns.

### [Preparation method of a highly enhanced composite membrane, composite membrane electrode, or fluorine-containing chlor-alkali battery membrane]

Cast coating the fluorine-containing proton exchange resin or ion exchange resin solution on the release membrane without a release agent which can be heat-resistant at least 100°C drying, and can cover at least two layers of microporous reinforced membranes, and fill the pores of both sides of the microporous reinforced membrane with fluorine-containing proton exchange resin solution or ion exchange resin solution as much as possible by multiple casting or immersion methods. Herein, the fluorine-containing proton exchange resin or ion exchange resin, its acid equivalent (meq/g) of sulfonic acid or carboxylic acid is 400-1500, preferably 500-1100, more preferably 600-950; drying the composite material to remove the solvent and obtain a composite membrane of a special highly enhanced fluorine-containing proton or ion-exchange membrane, a composite membrane electrode, or a special highly enhanced fluorine-containing chlor-alkali battery membrane.

The preparation method of a special highly enhanced fluorine-containing composite membrane or composite membrane electrode of the present invention, comprises:
Step 1, cast coating one side of a special release membrane with a fluorine-containing proton exchange resin solution or a fluorine-containing ion exchange resin solution for impregnating;
step 2, covering the coated resin solution with a microporous reinforced membrane, so that the coated resin solution on the special release membrane is fully impregnated with the coated microporous reinforced membrane to obtain a composite membrane;
step 3, drying the composite membrane obtained in step 2;
step 4, cast coating the resin solution on the upper surface of the microporous reinforced membrane of the composite membrane, secondary drying to obtain the finished product.

Wherein, the composition of the special release membrane is described in detail later.

The preparation method of the special enhanced fluorine-containing composite membrane or membrane electrode of the present invention has a simple process, can reduce production costs, and more importantly, avoids the problem that the release membrane contains a small amount of free release agent, so that the qualified rate of the final product is greatly increased. After drying, more than 60% of the pore volume of both sides of the microporous reinforced membrane is filled with fluorine-containing proton exchange resin, preferably more than 80%, and most preferably more than 90%; the dry weight ratio of the microporous reinforced membrane to fluorine-containing proton exchange resin or ion exchange resin is (5:95) to (40:60), preferably (10:90) to (30:70), and the total weight of the reinforced fluorine-containing composite membrane is 3 to 60 g/m², its thickness is 2 microns to 30 microns, the biaxial tensile strength (TD, MD) of the highly enhanced composite membrane should be greater than 40MPa, preferably greater than 50MPa, and most preferably greater than 80MPa; the room temperature ionic conductivity (Ionic Conductivity) of the enhanced composite membrane is greater than 0.007 (S/cm), preferably greater than 0.013 (S/cm), more preferably greater than 0.018 (S/cm); the air permeability of this enhanced composite membrane is extremely low, and the time required for 100 ml of air to pass through the composite membrane measured by Gurley densometer is more than 5 minutes, preferably more than 15 minutes.

In addition, coating the resin solution again on the microporous reinforced membrane of the composite membrane obtained in step 2, allowing the upper and lower sides of the microporous reinforced membrane to be fully impregnated and filled with the resin solution to form a composite thin membrane, and then drying all the materials at one time.

Or repeat step 2 after step 3, cover N layers of microporous reinforced membranes, and the microporous reinforced membranes can be selected from 2 to 50 layers, preferably 2 to 30 layers of microporous reinforced membranes of highly enhanced fluorine-containing composite membranes, wherein the total dry weight ratio of the microporous reinforced membrane to the fluorine-containing proton exchange resin or ion exchange resin is (5:95) to (40:60); the highly enhanced fluorine-containing composite membrane contains 2 to 50 layers of microporous reinforced membrane, preferably 2 to 30 layers of microporous reinforced membrane, and both sides of each layer of microporous reinforced membrane are filled with fluorine-containing proton exchange resin or ion exchange resin, the total weight of the highly enhanced fluorine-containing composite membrane is 3 to 500 g/m², preferably 5 to 300 g/m², and the most preferably is 10 to 250 g/m²; its thickness is 2 to 250 microns, preferably 3 to 150 microns, and the most preferably 5 to 130 microns; the biaxial tensile strength (TD, MD) of the highly enhanced fluorine-containing composite membrane is greater than 40MPa, preferably greater than 50MPa, the most preferably greater than 80MPa; the room temperature ionic conductivity (Ionic Conductivity) of the enhanced fluorine-containing composite membrane is greater than 0.007 (S/cm), preferably greater than 0.013 (S/cm), and more preferably greater than 0.018 (S/cm); the air permeability of the highly enhanced fluorine-containing composite membrane is extremely low, and the time required for 100 ml of air to pass through the composite membrane by Gurley densometer is more than 5 minutes, preferably more than 15 minutes.

The dry weight ratio of the microporous reinforced membrane to the fluorine-containing proton exchange resin or ion exchange resin is 10: 90 to 30:70.

The acid equivalent No. (g/equivalent wt.) of the fluorine-containing proton exchange resin or ion exchange resin is 400 to1500, preferably 600 to 1200, the fluorine-containing proton exchange resins or ion exchange resins are selected from, including but not limited to, fluorine-containing sulfonic acid resins and fluorine-containing carboxylic acid resins. One or more metal nanopowders, metal oxide nanopowders, carbon powder, graphite powder, graphene, and rare metal powders are mixed into the fluorine-containing proton exchange resin solution or fluorine-containing ion exchange resin solution, and the total weight of which is not more than 80% of the dry weight of the fluorine-containing proton exchange resin or ion exchange resin. The metal nanopowder includes but not limited to silver, platinum, palladium, or platinum/carbon composite material, and the metal oxide powder includes but not limited to zirconium dioxide or ceria.

The advantage of the material of the present invention is that this type of release membrane does not contain any coating release agent, which can avoid the risk of release agent polluting the membrane electrode product. Multiple cast coating multi-layer microporous reinforced membrane can cover up and greatly reduce the lack of air bubbles that may be formed due to a single coating membrane, and the yield can be greatly improved. It is unexpectedly found that the multi-layer microporous composite membrane can also increase the tensile strength of the composite membrane, improve the dimensional stability of the composite membrane, which is extremely important for the service life, and can achieve high-speed continuous production, meet the requirements of commercial large-scale batch production, and the obtained product membrane has high cleanliness and stability.

### [a composite membrane of a special highly enhanced fluorine-containing proton or ion exchange membrane, a composite membrane electrode, and a special highly enhanced fluorine-containing chlor-alkali battery membrane]

The highly enhanced composite membrane, the composite membrane electrode of the present invention comprises at least two layers of microporous reinforced membranes, wherein both sides of each layer of microporous reinforced membranes are filled with fluorine-containing proton or ion exchange resin, and the weight ratio of the microporous reinforced membranes to fluorine-containing proton exchange resin or ion exchange resin is 5:95 to 40:60; preferably < 10: 90) to (30 : 70), the total weight of the enhanced composite membrane, the composite membrane electrode is 2 to 500 g/m², preferably 5 to 300 g/m², and the most preferably is 5 to 200 g/m²; its thickness is 1 micron to 300 microns, preferably 2 microns to 200 microns, and the most preferably 3 microns to 100 microns; the biaxial tensile strength of the composite membrane and the composite membrane electrode (refer to ASTM D882 test method) (TD, MD) should be greater than 40MPa, preferably greater than 50MPa, and the most preferably greater than 80MPa, the room temperature proton/ion conductivity of the composite membrane (Ionic Conductivity, GB/T 20042.3-2009 Proton Exchange Membrane Fuel Cell Part 3: Proton Exchange Membrane Test Method) is greater than 0.007 (S/cm), preferably greater than 0.013 (S/cm), more preferably greater than 0.018 (S/cm), and the air permeability of the enhanced composite membrane and the composite membrane electrode is extremely low, and the time required for 100 ml of air to pass through the composite membrane and the composite membrane electrode measured by Gurley densometer is more than 5 minutes, preferably more than 15 minutes.

The special highly enhanced fluorine-containing chlor-alkali battery membrane of the present invention comprises at least two layers of microporous reinforced membranes, both sides of each layer of microporous reinforced membranes are filled with fluorine-containing proton exchange resin or ion-exchange resin, the weight ratio of the microporous reinforced membranes to fluorine-containing proton exchange resin or ion exchange resin is 5:95 to 40:60; the total weight of the highly enhanced fluorine-containing chlor-alkali battery membrane is 20 to 500 g/m², its thickness is 10 microns to 260 microns, the biaxial tensile strength of the highly enhanced fluorine-containing chlor-alkali battery membrane is greater than 40MPa, the room temperature ionic conductivity of the highly enhanced fluorine-containing chlor-alkali battery membrane is greater than 0.007S/cm, and the air permeability of the highly enhanced fluorine-containing chlor-alkali battery membrane is measured by Gurley densometer, and the time required for 100 milliliters of air to pass through the composite membrane is more than 5 minutes.

Alternatively, the fluorine-containing proton exchange resin or ion exchange resin solution can also be mixed with one or more types of metal nanopowder, metal oxide nanopowder, carbon powder, graphite powder, graphene, rare metal powder, etc., and the mixture can be filled into the pores on both sides of the microporous membrane.

The total weight of the metal nanopowder, metal oxide nanopowder, carbon powder, graphite powder, graphene, rare metal powder, etc. does not exceed 80% of the dry weight of the fluorine-containing proton exchange resin or ion exchange resin. The rare metal nanopowder includes but is not limited to silver, platinum, palladium, or platinum/carbon composite material. The metal oxide powder includes but is not limited to zirconium dioxide, or ceria.

In some examples of the present invention, the obtained composite membrane of special highly enhanced fluorine-containing proton or ion exchange membrane comprises at least two layers of microporous reinforced membranes, and both sides of each layer of microporous reinforced membranes are filled with fluorine-containing proton exchange resin or ion exchange resin, the total weight of the enhanced composite membrane is 2 to 500 g/m², preferably 5 to 300 g/m², the most preferably 5 to 200 g/m², and its thickness (see ASTM D756) is 1 micron to 300 micron, preferably 2 microns to 200 microns, the most preferably 3 microns to 100 microns, and the biaxial tensile strength of the highly enhanced composite membrane (refer to ASTM D882 test method) (TD, MD) should be greater than 40 MPa, preferably greater than 50 MPa, the most preferably greater than 80MPa, the room temperature proton/ion conductivity of the highly enhanced composite membrane (Ionic Conductivity, see GB/T 20042.3-2009 Proton Exchange Membrane Fuel Cell Part 3: Proton Exchange Membrane Test Method) is greater than 0.007 (S/cm), preferably greater than 0.013 (S/cm), more preferably greater than 0.018 (S/cm), the air permeability of the highly enhanced composite membrane is extremely low, and the time required for 100 ml of air to pass through the composite membrane measured by Gurley densometer is more than 5 minutes, preferably more than 15 minutes.

In some examples of the present invention, the obtained composite membrane electrode of special highly enhanced fluorine-containing proton or ion exchange membrane comprises at least two layers of microporous reinforced membranes, and both sides of each layer of microporous reinforced membranes are filled with fluorine-containing proton exchange resin or ion exchange resin, preferably 2 to 30 layers of microporous reinforced membrane, the most preferably 2 to 15 layers of microporous reinforced membrane. The total weight of the enhanced composite membrane electrode is 3 to 80 g/m², preferably 8 to 50 g/m², the most preferably 10 to 30 g/m², and its thickness (see ASTM D756) is 3 microns to 35 microns, preferably 5 microns to 25 microns, the most preferably 7 microns to 18 microns, and the biaxial tensile strength of the enhanced composite membrane electrode (TD, MD) should be greater than 40 MPa, preferably greater than 50 MPa, the most preferably greater than 80MPa, the room temperature proton/ion conductivity of the highly enhanced composite membrane electrode (Ionic Conductivity) is greater than 0.007 (S/cm), preferably greater than 0.013 (S/cm), more preferably greater than 0.018 (S/cm), the air permeability of the highly enhanced composite membrane electrode is extremely low, and the time required for 100 ml of air to pass through the composite membrane measured by Gurley densometer is more than 5 minutes, preferably more than 15 minutes.

In some other examples of the present invention, the composite membrane electrode of special highly enhanced fluorine-containing proton or ion exchange membrane comprises at least two layers of microporous reinforced membranes, preferably 2 to 45 layers of microporous reinforced membranes, the most preferably 2 to 20 layers of microporous reinforced membranes; both sides of each layer of microporous reinforced membranes are filled with fluorine-containing proton exchange resin or ion exchange resin, the weight ratio of the microporous reinforced membrane to the fluorine-containing proton exchange resin or ion exchange resin is (5: 95) to (40: 60), preferably (10: 90) to (30: 70), the total weight of the highly enhanced composite membrane electrode is 70 to 500 g/m², preferably 80 to 300 g/m², the most preferably 100 to 200 g/m², and its thickness is 30 microns to 300 microns, preferably 50 microns to 200 microns, the most preferably 60 microns to 120 microns, and the biaxial tensile strength of the enhanced composite membrane electrode (TD, MD) should be greater than 40 MPa, preferably greater than 50 MPa, the most preferably greater than 80MPa, the room temperature proton/ion conductivity of the highly enhanced composite membrane electrode (Ionic Conductivity) is greater than 0.007 (S/cm), preferably greater than 0.013 (S/cm), more preferably greater than 0.018 (S/cm), the air permeability of the highly enhanced composite membrane electrode is extremely low, and the time required for 100 ml of air to pass through the composite membrane measured by Gurley densometer is more than 5 minutes, preferably more than 15 minutes.

In some further examples of the present invention, the special highly enhanced fluorine-containing chlor-alkali battery membrane comprises at least three layers of microporous reinforced membranes, both sides of each layer of microporous reinforced membranes are filled with fluorine-containing proton exchange resin or ion exchange resin, the weight ratio of the microporous reinforced membrane to the fluorine-containing proton exchange resin or ion exchange resin is (5: 95) to (40: 60), preferably (10: 90) to (30: 70), the total weight of the special highly enhanced fluorine-containing chlor-alkali battery membrane is 2 to 500 g/m², preferably 5 to 300 g/m², the most preferably 5 to 200 g/m², and its thickness is 1 micron to 300 microns, preferably 2 microns to 200 microns, the most preferably 3 microns to 100 microns, and the biaxial tensile strength of special highly enhanced fluorine-containing chlor-alkali battery membrane (refer to ASTM D882 test method) (TD, MD) should be greater than 40 MPa, preferably greater than 50 MPa, the most preferably greater than 80MPa, the room temperature proton/ion conductivity of the highly enhanced composite membrane (Ionic Conductivity, GB/T 20042.3-2009 Proton Exchange Membrane Fuel Cell Part 3: Proton Exchange Membrane Test Methods) is greater than 0.007 (S/cm), preferably greater than 0.013 (S/cm), more preferably greater than 0.018 (S/cm), and the air permeability of the highly enhanced composite membrane electrode is extremely low, and the time required for 100 ml of air to pass through the composite membrane measured by Gurley densometer is more than 5 minutes, preferably more than 15 minutes.

In some further examples of the present invention, the special highly enhanced fluorine-containing chlor-alkali battery membrane comprises 3 to 30 layers of microporous reinforced membranes, both sides of each layer of microporous reinforced membranes are filled with fluorine-containing proton exchange resin or ion exchange resin, one side of the highly enhanced fluorine-containing chlor-alkali battery composite membrane is completely covered by perfluorocarboxylic acid resin, and the other side is completely covered by perfluorosulfonic acid resin; the total weight ratio of the microporous reinforced membrane to the fluorine-containing proton exchange resin or ion exchange resin is (5: 95) to (40: 60), preferably (10: 90) to (30: 70), the total weight of the special highly enhanced fluorine-containing chlor-alkali battery composite membrane is 20 to 450 g/m², preferably 50 to 300 g/m², the most preferably 100 to 250 g/m², and its thickness is 10 microns to 230 microns, preferably 25 microns to 150 microns, the most preferably 50 microns to 130 microns, and the biaxial tensile strength of special highly enhanced fluorine-containing chlor-alkali battery composite membrane (TD, MD) should be greater than 40 MPa, preferably greater than 50 MPa, the most preferably greater than 80MPa, the room temperature proton/ion conductivity of the highly enhanced fluorine-containing chlor-alkali battery composite membrane (Ionic Conductivity) is greater than 0.007 (S/cm), preferably greater than 0.013 (S/cm), more preferably greater than 0.018 (S/cm), and the air permeability of the highly enhanced fluorine-containing chlor-alkali battery composite membrane is extremely low, and the time required for 100 ml of air to pass through the composite membrane measured by Gurley densometer is more than 5 minutes, preferably more than 15 minutes.

The total dry weight ratio of the perfluorocarboxylic acid resin filled in the special highly enhanced fluorine-containing chlor-alkali battery membrane is (1:9) to (5:5), preferably (2:8) to (4:6).

The special highly enhanced fluorine-containing chlor-alkali battery membrane of the present invention is not troubled by a release agent pollution, can be heat-treated for many times, and can be heat-resistant at least 100°C; the multi-layer microporous reinforced membrane can cover the absence of bubbles that may be formed in a single coating membrane, and the yield can be greatly improved, it can also increase the tensile strength of the special highly enhanced fluorine-containing chlor-alkali battery membrane, improve the dimensional stability of the special highly enhanced fluorine-containing chlor-alkali battery membrane, which is extremely important for the service life, and can achieve high-speed continuous production to meet the requirements of commercial large-scale batch production, and the prepared product membrane has high cleanliness and stability.

### [A release membrane without a release agent]

One of the purposes of the present invention is to address the deficiencies in the existing production process, as the traditional release membrane contains a small amount of free release agent, especially a silicon-containing release agent, it is easily absorbed by the cast coating material and causes the final product to be polluted and difficult to clean, which is extremely unfavorable for the production of high-quality, high-clean proton exchange membranes. The invention provides a type of release membrane without a release agent (that is, the membrane itself has a release function in its physical properties and does not need corona or coating with a release agent), which can be used in continuous production, and cast a fluorine-containing proton exchange resin solution or ion exchange resin solution on this type of release membrane without a release agent, and dried at least 100°C without deformation, and can be used to prepare high-quality fluorine-containing proton exchange membranes or fluorine-containing ion exchange membranes. Also it can cast coat more than once, cast coat on the surface of this kind of modified thin membrane without a release agent, can also cover the microporous reinforced membrane on the coating solution, the coated fluorine-containing sulfonic acid or carboxylic acid resin solution, after drying and repeated processing, to achieve the large-scale production of fluorine-containing proton exchange membranes, it is more convenient and further reduce production costs.

The invention discloses a type of special release membrane without any coating release agent and not requiring corona, the thickness can be selected from 10 to 500 microns, preferably from 25 to 300 microns, and the width is at least 100 mm, and it is at least heat-resistant at 100°C without deformation, preferably heat-resistant at 120°C without deformation, which can be used to prepare fluorine-containing proton exchange membranes or fluorine-containing ion exchange membranes, etc., and can be applied to battery diaphragm. The production process of the battery diaphragm adopts a fluorine-containing proton exchange resin solution or a fluorine-containing ion exchange resin solution with good membrane-forming properties and cast coat and tile to this special release membrane, dry and form a membrane, shape and roll.

Wherein, the release membrane components can be selected from: (1) engineering plastics containing bisphenol A as a main component (weight ratio greater than 50%): selected from polymers obtained by polymerization or copolymerization with bisphenol A, such as polycarbonate, polyphenylene ether, polysulfone resin, polyepoxy resin, or mixed copolymers thereof; , polyepoxy resin, or a mixed copolymer thereof; or (2) engineering plastics containing hexa-fluoro-dimethyl bisphenol A (weight ratio greater than 50%) as a main component: selected from polymers obtained by polymerization or copolymerization of hexa-fluoro-dimethyl bisphenol A, such as polycarbonate, polyphenylene ether, polysulfone resin, polyepoxy resin, or mixed copolymers thereof.

The membrane surface does not contain any external coating release agent, no need corona, and can cast coat a single time or multiple times, and can cover with a microporous reinforced membrane during the cast coating process to enhance the strength of the composite membrane; after casting and drying, it was unexpectedly found that it can form a proton exchange membrane or ion exchange membrane that is easy to peel and has no residual solvent or release agent pollution. The advantage of the material of the present invention is that this type of release membrane does not contain any coating release agent, so the risk of contamination of the product membrane by the release agent can be avoided, and the multi-layer microporous reinforced membrane can be casting coated multiple times, which can cover up and greatly reduce the lack of air bubbles that may be formed due to a single coating membrane, the yield can be greatly improved, continuous production can be achieved, and the requirements of commercial large-scale batch production can be met, the prepared product membrane has high cleanliness and stability, and is convenient for waste recycling.

The special release membrane without a release agent is applied to the casting method to prepare battery diaphragm, the production process is as follows: 1. one side of the special release membrane is coated and impregnated with a fluorine-containing proton exchange resin solution or a fluorine-containing ion exchange resin solution, and then the coated resin solution is covered with a microporous reinforced membrane, so that the coated resin solution on the special release membrane is fully impregnated with the covered microporous reinforced membrane, and then it can be dried first; 2. the composite membrane obtained in step 1 (relying on the special engineering plastic membrane) was carried out a second resin solution cast coating on the covered first layer of microporous reinforced membrane, and then the second layer of microporous reinforced membrane is covered on the resin solution coated for the second time, so that the coated resin solution on the special release membrane and the covered microporous reinforced membrane are fully impregnated, and then dried; after drying, more than 60% of the pore volume of both sides of each layer of microporous reinforced membrane is filled with fluorine-containing proton exchange resin, preferably more than 80%, and most preferably more than 90%; 3. repeat step 2 at least 0 to 48 times, preferably 0 to 28 times, and then the last layer of microporous reinforced membrane is coated with the resin solution for the last time, and then dry it again to obtain a highly enhanced proton exchange membrane or ion exchange membrane or membrane electrode containing at least two layers (2 to 50 layers, preferably 2 to 30 layers) of microporous reinforced membrane.

### Examples:

### Example 1: (A release membrane without a release agent)

(1A) Melt extrude the carbonate resin obtained by polycondensation of bisphenol A (without adding any auxiliary agent or release agent), and biaxially stretch it to obtain transparent membranes with a thickness of about 300 microns, 150 microns, and 25 microns (direct use, no corona);
(1B) Melt extrude the carbonate resin obtained by polycondensation of hexa-fluoro-dimethyl bisphenol A (without adding any auxiliary agent or release agent), and biaxially stretch it to obtain transparent membranes with a thickness of about 300 microns, 150 microns, and 25 microns (direct use, no corona);
(1C) Prepare a release membrane with a thickness similar to the above, using polyphenylene ether-bisphenol A epoxy resin (EHPPO type, without adding any auxiliary agent or release agents, directly use, without corona), preparation process of resin refers to: low dielectric modification of hyperbranched polyphenylene ether bisphenol A epoxy resin, Lv Jianyong, Meng Yan, He Lifan, Qiu Teng, Li Xiaoyu, Wang Haiqiao, Key Laboratory of Carbon Fiber and Functional Polymers, Ministry of Education, School of Materials Science and Engineering, Beijing University of Chemical Technology, Beijing 100029. Abstract: A self-made reactive epoxy-terminated hyperbranched polyphenylene ether (EHPPO) was added to bisphenol A epoxy resin for modification and cured with an anhydride curing agent. The thermal properties, mechanical properties and dielectric properties of the cured samples were characterized. In addition, hyperbranched polyphenylene oxide (CHPPO) with the same molecular main chain structure and non-reactive benzyl end group was used for comparative modification. The results show that the two different modifiers have their own advantages in the modification effect of bisphenol A epoxy resin, wherein the epoxy resin modified by EHPPO has more excellent thermal properties and tensile strength, while the dielectric constant of the epoxy resin modified by CHPPO is relatively lower.

The membranes prepared from the above (1A) to (1C) under the operation of no corona and coating release agent all have good release effect and no residue.

### Example 2: (formula of proton exchange resin solution or ion exchange resin solution or mixed solution)

S1 (weight ratio: about 20% [tetrafluoroethylene and CF₂=CF-O-CF₂CF₂-SO₃H fluorine-containing proton exchange resin copolymer, its acid equivalent weight (meq/g) is about 830]; 40% ethanol; 40% water);
S2 (weight ratio: about 20% [tetrafluoroethylene and CF₂=CF-O-CF₂CF₂-SO₃H fluorine-containing proton exchange resin copolymer, its acid equivalent weight(meq/g) is about 790]; 40% ethanol; 40% water);
L1 (weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 1000]; 40% n-propanol; 40% water);
L2 (weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 950]; 40% ethanol; 40% water);
L3 (weight ratio: 20% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water);
L4 (weight ratio: about 10% platinum black powder; 10% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water);
L5 (weight ratio: about 5% ZrO2 zirconia nanopowder; about 15% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water);
LC6 (weight ratio: about 5% ZrO2 zirconia nanopowder; about 15% [tetrafluoroethylene and CF₂=CF-O-CF₂CF₂CF₂-COOH fluorine-containing proton exchange resin copolymer, its acid equivalent weight(meq/g) is about 1000]; 40% n-propanol; 40% water);
LC7 (weight ratio: about 20% [tetrafluoroethylene and CF₂=CF-O-CF₂CFCF₃-OCF₂CF₂-COOH fluorine-containing proton exchange resin copolymer, its acid equivalent weight(meq/g) is about 950]; 40% n-propanol; 40% water);
L8 (weight ratio: about 10% platinum/carbon black powder; 10% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water);

### Example 3: (for comparison)

### (Release membrane 1A, one layer of microporous reinforced membrane with a thickness of 10 microns)

Proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) about 830]; 40% ethanol; 40% water) was coated on the release membrane 1A with a thickness of about 25 microns, and then covered with a microporous polytetrafluoroethylene reinforced membrane with a thickness of about ~ 10 microns, being dried with a dryer, the same proton exchange resin solution was coated on the microporous polytetrafluoroethylene reinforced membrane, being dried with a dryer again, finally put it in an oven at 120 degrees, for baking 5 minutes, taken out and cooled down, the fluorine-containing proton exchange membrane can be peeled off from the release membrane 1A without any visible residue on the release membrane, the peeled fluorine-containing proton exchange membrane is flat with a thickness of about 16 to 18 microns, the density is about 2.20, the acid equivalent weight(meq/g) of the composite membrane is about 1000, and the tensile strength, TD and MD, are all at 40 to 50MPa, the room temperature proton/ion conductivity (Ionic Conductivity) is greater than 0.012 (S/cm), and the time required for 100 ml of air to pass through the composite membrane measured by using a Gurley densometer is more than 15 minutes.

### Example 4: (Release membrane 1A, two layers of microporous reinforced membrane with a thickness of 5 microns)

Proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) about 830]; 40% ethanol; 40% water) was coated on the release membrane 1A with a thickness of about 25 microns, and then covered with a thinner microporous polytetrafluoroethylene reinforced membrane(continuous phase) with a thickness of about ~ 5 microns, being dried with a dryer; the same proton exchange resin solution was coated on the microporous polytetrafluoroethylene reinforced membrane, and then covered with a thinner microporous polytetrafluoroethylene reinforced membrane(continuous phase) with a thickness of about ~ 5 microns, being dried with a dryer; then the same proton exchange resin solution was coated on the microporous polytetrafluoroethylene reinforced membrane, being dried with a dryer again; finally put it in an oven at 120 degrees, for baking 5 minutes, taken out and cooled down, the fluorine-containing proton exchange membrane can be peeled off from the release membrane 1A without any visible residue on the release membrane, the peeled fluorine-containing proton exchange membrane is flat with a thickness of about 16 to18 microns, the density is about 2.19, the acid equivalent weight(meq/g) of the composite membrane is about 1020, and the tensile strength, TD and MD, are all at 60 to 70 MPa, it is unexpectedly found that its tensile strength is better than the method of adopting a single-layer microporous reinforced membrane with a thickness of 10 microns in Example 3, the room temperature proton/ion conductivity (Ionic Conductivity) is greater than 0.012 (S/cm), and the time required for 100 ml of air to pass through the composite membrane by using a Gurley densometer is more than 15 minutes.

### Example 5: (release membrane 1A, three layers of microporous reinforced membrane with a thickness of 3 microns)

Proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) about 830]; 40% ethanol; 40% water) was coated on the release membrane 1A with a thickness of about 25 microns, and then covered with a thinner microporous polytetrafluoroethylene reinforced thin membrane(continuous phase) with a thickness of about ~ 3 microns, being dried with a dryer; the same proton exchange resin solution was coated on the microporous polytetrafluoroethylene reinforced membrane, and then covered with a thinner microporous polytetrafluoroethylene reinforced thin membrane(continuous phase) with a thickness of about ~ 3 microns, dried with a dryer; then the same proton exchange resin solution was coated on the microporous polytetrafluoroethylene reinforced membrane, and then covered with a thinner microporous polytetrafluoroethylene reinforced membrane(continuous phase) with a thickness of about ~ 3 microns, being dried with a dryer; the same proton exchange resin solution was coated on the microporous polytetrafluoroethylene reinforced membrane, being dried with a dryer again; finally put it in an oven at 120 degrees, for baking 5 minutes, taken out and cooled down, the fluorine-containing proton exchange membrane can be peeled off from the release membrane 1A without any visible residue on the release membrane, the peeled fluorine-containing proton exchange membrane is flat with a thickness of about 16 to 18 microns, the density is about 2.18, the acid equivalent weight(meq/g) of the composite membrane is about 1040, and the tensile strength, TD and MD, are all at 80 to 90 MPa, it is unexpectedly found that its tensile strength is better than the method of adopting a single-layer microporous reinforced membrane with a thickness of 10 microns in Example 3, the room temperature proton/ion conductivity (Ionic Conductivity) is greater than 0.012 (S/cm), and the time required for 100 ml of air to pass through the composite membrane by using a Gurley densometer is more than 15 minutes.

### Example 6 (Release membrane 1B, two layers of microporous reinforced membrane)

Proton exchange resin solution S2 (weight ratio: about 20% [tetrafluoroethylene and CF₂=CF-O-CF₂CF₂-SO₃H fluorine-containing proton exchange resin copolymer, its acid equivalent weight(meq/g) about 790]; 40% ethanol; 40% water) was coated on the release membrane 1B with a thickness of about 25 microns, and then covered with a thinner microporous polytetrafluoroethylene reinforced membrane(continuous phase) with a thickness of about ~ 2 microns, being dried with a dryer; the same proton exchange resin solution was coated on the microporous polytetrafluoroethylene reinforced membrane, and then covered with a thinner microporous polytetrafluoroethylene reinforced membrane(continuous phase) with a thickness of about ~ 2 microns, being dried with a dryer; then the same proton exchange resin solution was coated on the microporous polytetrafluoroethylene reinforced membrane, being dried with a dryer again; put it in an oven at 120 degrees, for baking 5 minutes, taken out and cooled down, the fluorine-containing proton exchange membrane can be peeled off from the release membrane 1B without any visible residue on the release membrane, the peeled fluorine-containing proton exchange membrane is flat with a thickness of about 8 to 9 microns, the density is about 2.20, the acid equivalent weight(meq/g) of the composite membrane is about 1010, and the tensile strength, TD and MD, are all greater than 100 MPa, the room temperature proton/ion conductivity (Ionic Conductivity) is greater than 0.013 (S/cm), and the time required for 100 ml of air to pass through the composite membrane by using a Gurley densometer is more than 15 minutes.

### Example 7 (Release membrane 1C, two layers of microporous reinforced membrane)

Proton exchange resin solution S 1 (weight ratio: about 20% [tetrafluoroethylene and CF₂=CF-O-CF₂CF₂-SO₃H fluorine-containing proton exchange resin copolymer, its acid equivalent weight(meq/g) about 830]; 40% ethanol; 40% water) was coated on the release membrane 1C with a thickness of about 25 microns, and then covered with a thinner microporous polytetrafluoroethylene reinforced membrane(continuous phase) with a thickness of about ~ 1 micron, being dried with a dryer; the same proton exchange resin solution was coated on the microporous polytetrafluoroethylene reinforced membrane, and then covered with a thinner microporous polytetrafluoroethylene reinforced membrane(continuous phase) with a thickness of about ~ 1 micron, dried with a dryer; then the same proton exchange resin solution was coated on the microporous polytetrafluoroethylene reinforced membrane, being dried with a dryer again; finally put it in an oven at 120 degrees, for baking5 minutes, taken out and cooled down, the fluorine-containing proton exchange membrane can be peeled off from the release membrane 1C without any visible residue on the release membrane, the peeled fluorine-containing proton exchange membrane is flat with a thickness of about 5 to 6 microns, the density is about 2.20, the acid equivalent weight(meq/g) of the composite membrane is about 990, and the tensile strength, TD and MD, are all greater than 120 MPa, the room temperature proton/ion conductivity (Ionic Conductivity) is greater than 0.015 (S/cm), and the time required for 100 ml of air to pass through the composite membrane by using a Gurley densometer is more than 15 minutes.

### Example 8 (Release membrane 1A, five layers of microporous reinforced membrane, two layers of polytetrafluoroethylene inside and outside, and three layers of polypropylene in the middle)

Proton exchange resin solution S 1 (weight ratio: about 20% [tetrafluoroethylene and CF₂=CF-O-CF₂CF₂-SO₃H fluorine-containing proton exchange resin copolymer, its acid equivalent weight(meq/g) about 830]; 40% ethanol; 40% water) was cast coated on the release membrane 1A with a thickness of about 150 microns, and then covered with a thinner microporous polytetrafluoroethylene reinforced membrane(continuous phase) with a thickness of about ~ 3 microns, being dried with a dryer; the same proton exchange resin solution was coated on the microporous polytetrafluoroethylene reinforced membrane, then covered with a thin microporous polypropylene reinforced membrane, with a thickness of about ~ 4 microns, being dried with a dryer; then the same proton exchange resin solution was coated on the microporous polypropylene reinforced membrane, and then covered with a thinner microporous polypropylene reinforced membrane with a thickness of about ~ 4 microns, being dried with a dryer; the same proton exchange resin solution was coated on the microporous polypropylene reinforced membrane with a thickness of about ~ 4 microns, being dried with a dryer ; then the same proton exchange resin solution was coated on the microporous polypropylene reinforced membrane, and then covered with a thinner microporous polytetrafluoroethylene reinforced membrane with a thickness of about ~ 3 microns, being dried with a dryer; the same proton exchange resin solution was coated on the microporous polytetrafluoroethylene reinforced membrane, being dried with a dryer again; finally put it in an oven at 120 degrees, for baking5 minutes, taken out and cooled down, the fluorine-containing proton exchange membrane can be peeled off from the release membrane 1A without any visible residue on the release membrane, the peeled fluorine-containing proton exchange membrane is flat with a thickness of about 28 to 30 microns, the density is about 2.1, the acid equivalent weight(meq/g) of the composite membrane is about 1050, and the tensile strength, TD and MD, are all greater than 70 MPa, the room temperature proton/ion conductivity (Ionic Conductivity) is greater than 0.011 (S/cm), and the time required for 100 ml of air to pass through the composite membrane by using a Gurley densometer is more than 15 minutes.

### Example 9 (Release membrane 1A, ten layers of microporous reinforced membrane, two layers of polytetrafluoroethylene inside and outside, eight layers of polyacrylonitrile PAN in the middle)

The proton exchange resin solution L1 (weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 1000]; 40% n-propanol; 40% water) was cast coated on the release membrane 1A with a thickness of about 150 microns, and then covered with a thinner microporous polytetrafluoroethylene reinforced membrane with a thickness of about ~ 3 microns, being dried with a dryer; the proton exchange resin solution L2(weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 950]; 40% ethanol; 40% water) was coated on the microporous polytetrafluoroethylene reinforced membrane, then covered with a thin microporous polyacrylonitrile PAN reinforced membrane with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polyacrylonitrile PAN reinforced membrane, with a thickness of about 3 to 4 microns, being dried with a dryer; the same proton exchange resin solution L2 was coated on the microporous polyacrylonitrile PAN reinforced membrane, then covered with a thin microporous polytetrafluoroethylene reinforced membrane, with a thickness of about ~ 3 microns, being dried with a dryer; the proton exchange resin solution L1 was coated on the polytetrafluoroethylene reinforced membrane, being dried with a dryer; finally put it in an oven at 130 degrees, for baking10 minutes, taken out and cooled down, the fluorine-containing proton exchange membrane can be peeled off from the release membrane 1A without any visible residue on the release membrane, the peeled fluorine-containing proton exchange membrane is flat with a thickness of about 58 to 60 microns, the density is about 2.1, and the tensile strength, TD and MD, are all greater than 50 MPa, the room temperature proton/ion conductivity (Ionic Conductivity) is greater than 0.01(S/cm), and the time required for 100 ml of air to pass through the composite membrane by using a Gurley densometer is more than 15 minutes.

### Example 10 (Release membrane 1B, fifteen layers of microporous reinforced membrane, all expanded polytetrafluoroethylene)

Proton exchange membrane electrode with platinum black on both sides:
The extremely fine powder of metal platinum is black, so it is called "platinum black", with an apparent density of 15.8 to 17.6, a specific surface area of 40 to 60 m²/g, and a particle size of less than 10 nm. Platinum black powder and proton exchange resin solution L4 (weight ratio: about 10% platinum black powder; 10% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water) were cast coated on the release membrane 1B with a thickness of about 150 microns, and then covered with a thinner microporous polytetrafluoroethylene reinforced membrane with a thickness of about ~ 3 microns, being dried with a dryer; the proton exchange resin solution L1 (weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 1000]; 40% n-propanol; 40% water) was coated on the microporous polytetrafluoroethylene reinforced membrane, and then covered with a thinner microporous polytetrafluoroethylene reinforced membrane with a thickness of about ~ 3 microns, being dried with a dryer; then the proton exchange resin solution L2 (weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 950]; 40% ethanol; 40% water), was coated on the microporous polytetrafluoroethylene reinforced membrane, and then covered with a thinner microporous polytetrafluoroethylene reinforced membrane with a thickness of about ~ 3 microns, being dried with a dryer; [Then the following process was repeated 10 times: the same proton exchange resin solution L2 was coated on the microporous polytetrafluoroethylene reinforced membrane, and then a thin microporous polytetrafluoroethylene reinforced membrane was covered with a thickness of about ~ 3 microns, being dried with a dryer]; the proton exchange resin solution L1 was coated on the microporous polytetrafluoroethylene reinforced membrane, and then covered with a thinner microporous polytetrafluoroethylene reinforced membrane with a thickness of about ~ 3 microns, being dried with a dryer; finally, the proton exchange resin solution L4 containing platinum black was coated on the microporous polytetrafluoroethylene reinforced membrane, and then being dried with a dryer; finally put it in an oven at 130 degrees, for baking10 minutes, taken out and cooled down, the fluorine-containing proton exchange membrane with platinum black on both sides can be peeled off from the release membrane 1B without any visible residue on the release membrane, the peeled fluorine-containing proton exchange membrane with platinum black on both sides is flat with a thickness of about 87 to 90 microns, the density is about 2.2, and the tensile strength, TD and MD, are all greater than 50 MPa, the room temperature proton/ion conductivity (Ionic Conductivity) is greater than 0.008(S/cm), and the time required for 100 ml of air to pass through the composite membrane by using a Gurley densometer is more than 15 minutes.

### Example 11 (Release membrane 1A, twenty layers of microporous reinforced membrane, all expanded polytetrafluoroethylene)

### Reinforced chlor-alkali battery diaghram:

Nano-metal zirconium oxide powder was mixed into perfluorocarboxylic acid resin solution to obtain LC6 (weight ratio: about 5% ZrO2 zirconia nanopowder; 15% [tetrafluoroethylene and CF₂=CF-O-CF₂CF₂CF₂-COOH fluorine-containing proton exchange resin copolymer, its acid equivalent weight(meq/g) is about 1000]; 40% n-propanol; 40% water) was cast coated on the release membrane 1A with a thickness of about 150 microns, then covered with a thinner microporous polytetrafluoroethylene reinforced membrane with a thickness of about ~ 3 microns, being dried with a dryer; the perfluorocarboxylic acid resin solution LC7 (weight ratio: about 20% [tetrafluoroethylene and CF₂=CF-O-CF₂CFCF₃-OCF₂CF₂-COOH fluorine-containing proton exchange resin copolymer, its acid equivalent weight(meq/g) is about 950]; 40% n-propanol; 40% water) was coated on the microporous polytetrafluoroethylene reinforced membrane, then covered with a thinner microporous polytetrafluoroethylene reinforced membrane with a thickness of about ~ 3 microns, being dried with a dryer; then the perfluorocarboxylic acid resin solution LC7 (weight ratio: about 20% [tetrafluoroethylene and CF₂=CF-O-CF₂CFCF₃-OCF₂CF₂-COOH fluorine-containing proton exchange resin copolymer, its acid equivalent weight(meq/g) is about 950]; 40% n-propanol; 40% water) was coated again on the microporous polytetrafluoroethylene reinforced membrane, then covered with a thinner microporous polytetrafluoroethylene reinforced membrane with a thickness of about ~ 3 microns, being dried with a dryer; [Then the following process was repeated three times: the same perfluorocarboxylic acid resin solution LC7 was coated on the microporous polytetrafluoroethylene reinforced membrane, and then covered with a thin microporous polytetrafluoroethylene reinforced membrane with a thickness of about ~ 3 microns, and being dried with a dryer]; [then the following process was repeated 13 times: the perfluorosulfonic acid resin solution L2 was coated on the microporous PTFE reinforced membrane, and then covered with a thin microporous PTFE reinforced membrane with a thickness of about ~3 microns, and dried with a dryer]; finally, a perfluorosulfonic acid resin solution L5 containing nano-zirconia powder was coated on the microporous polytetrafluoroethylene reinforced membrane, and then being dried with a dryer again; finally put it in an oven at 130 degrees, for baking10 minutes and taken out to cool down to obtain the reinforced composite membrane with zirconium dioxide on both sides, the perfluorocarboxylic acid resin on one side, and fluorine-containing sulfonic acid resin on the other side, the reinforced composite membrane can be peeled off from the release membrane 1A smoothly without visible residue on the release membrane, the peeled fluorine-containing chlor-alkali battery membrane with zirconium dioxide on both sides is flat with a thickness of about 115-120 microns, the density is about 2.2, the tensile strength TD, MD are both greater than 50MPa, and the room temperature ionic conductivity (Ionic Conductivity) is greater than 0.01 (S/cm) and the time required for 100 ml of air to pass through this composite membrane by using a Gurley densometer is more than 15 minutes.

### Example 12 (Release membrane 1B, thirty layers of microporous reinforced membrane, all expanded polytetrafluoroethylene membranes pre-filled with cerium dioxide CeO2)

### Enhanced proton exchange membrane:

L3 (weight ratio: 20% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water) was cast coated on the release membrane 1B with a thickness of about 300 microns, then covered with a thinner microporous polytetrafluoroethylene reinforced membrane[Pre-filled weight ratio (ceria CeO2: PTFE) ~ 10%], with a thickness of about ~ 3 microns, being dried with a dryer; then the perfluorocarboxylic acid resin solution L2 (weight ratio: about 20% [tetrafluoroethylene and CF₂=CF-O-CF₂CFCF₃-OCF₂CF₂-SO₃H fluorine-containing proton exchange resin copolymer, its acid equivalent number (meq/g) is about 950]; 40% ethanol; 40% water) was coated on the microporous polytetrafluoroethylene reinforced membrane, then covered with a thinner microporous polytetrafluoroethylene reinforced membrane(containing 10% ceria CeO2] with a thickness of about ~ 3 microns, being dried with a dryer; then the perfluorocarboxylic acid resin solution L2 was coated on the microporous polytetrafluoroethylene reinforced membrane, then covered with a thinner microporous polytetrafluoroethylene reinforced membrane(containing 10% ceria CeO2] with a thickness of about ~ 3 microns, being dried with a dryer; [Then repeat the following process 27 times: the same perfluorosulfonic acid resin solution L2 was coated on the microporous polytetrafluoroethylene reinforced membrane, and then covered with a thin microporous polytetrafluoroethylene reinforced membrane (containing 10% cerium dioxide CeO2), with a thickness of about ~3 microns, and being dried with a dryer]; finally, a fluorine-containing sulfonic acid resin solution L3 was coated on the microporous polytetrafluoroethylene reinforced membrane, and being dried with a dryer again; and finally put it in an oven at 130 degrees for baking 10 minutes, and taken out to cool down to obtain the fluorine-containing sulfonic acid resin reinforced membrane containing ceria, the reinforced composite membrane can be peeled off from the release membrane 1B smoothly without visible residue on the release membrane, the peeled fluorine-containing sulfonic acid resin reinforced membrane containing ceria is flat with a thickness of about 175-180 microns, the density is about 2.2, the tensile strength TD, MD are both greater than 50MPa, and the room temperature ionic conductivity (Ionic Conductivity) is greater than 0.01 (S/cm) and the time required for 100 ml of air to pass through this composite membrane by using a Gurley densometer is more than 15 minutes.

### Example 13 (Release membrane 1A, forty-five layers of microporous reinforced membrane, all expanded polytetrafluoroethylene membranes pre-filled with cerium dioxide CeO2)

### Enhanced proton exchange membrane:

L5 (weight ratio: 5% zirconium dioxide ZrO2; 15% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water)) was cast coated on the release membrane 1A with a thickness of about 300 microns, then covered with a thinner microporous polytetrafluoroethylene reinforced membrane[Pre-filled weight ratio (ceria CeO₂: PTFE) ~ 10%], with a thickness of about ~ 3 microns, being dried with a dryer; then the Perfluorosulfonic acid resin solution L2 (weight ratio: about 20% [tetrafluoroethylene and CF₂=CF-O-CF₂CFCF₃-OCF₂CF₂-SO₃H fluorine-containing proton exchange resin copolymer, its acid equivalent weight(meq/g) is about 950]; 40% ethanol; 40% water) was coated on the microporous polytetrafluoroethylene reinforced membrane, then covered with a thinner microporous polytetrafluoroethylene reinforced membrane(containing 10% cerium dioxide CeO2) with a thickness of about ~ 3 microns, being dried with a dryer; then the Perfluorocarboxylic acid resin solution L2 was coated on the microporous polytetrafluoroethylene reinforced membrane, then covered with a thinner microporous polytetrafluoroethylene reinforced membrane(containing 10% cerium dioxide CeO₂) with a thickness of about ~ 3 microns, being dried with a dryer; [Then repeat the following process 37 times: the same perfluorosulfonic acid resin solution L2 was coated on the microporous polytetrafluoroethylene reinforced membrane, and then covered with a thin microporous polytetrafluoroethylene reinforced membrane (containing 10% cerium dioxide CeO₂), with a thickness of about ~3 microns, being dried with a dryer]; finally, a fluorine-containing sulfonic acid resin solution L5 was coated on the microporous polytetrafluoroethylene reinforced membrane, being dried with a dryer again; and finally put it in an oven at 130 degrees for baking 10 minutes, taken out to cool down to obtain the fluorine-containing sulfonic acid resin reinforced membrane containing zirconia on both sides and ceria on the inside, the reinforced composite membrane can be peeled off from the release membrane 1A smoothly without visible residue on the release membrane, the peeled enhanced fluorine-containing proton exchange membrane containing cerium oxide is flat with a thickness of about 260 to 270 microns, the density is about 2.2, the tensile strength TD and MD are both greater than 50 MPa, and the room temperature proton/ion conductivity (Ionic Conductivity) is greater than 0.01 (S/ cm), the time required for 100 ml of air to pass through the composite membrane measured by a Gurley densometer is more than 15 minutes.

### Example 14 (Release membrane 1B, three layers of microporous reinforced membrane)

Proton exchange resin solution L8 (weight ratio: about 10% platinum/carbon black powder; 10% [tetrafluoroethylene and CF₂=CF-O-CF₂CFCF₃-OCF₂CF₂-SO₃H fluorine-containing proton exchange resin copolymer, its acid equivalent weight(meq/g) is about 1100]; 40% n-propanol; 40% water) was cast coated on the release membrane 1B with a thickness of about 150 microns, and then covered with a thin microporous polytetrafluoroethylene reinforced membrane(containing 10% ceria CeO2) with a thickness of about ~ 3 microns, being dried with a dryer; the proton exchange resin solution L2 was coated on the microporous polytetrafluoroethylene reinforced membrane, and then covered with a thinner microporous polytetrafluoroethylene reinforced membrane (containing 10% ceria CeO2) with a thickness of about ~ 3 microns, being dried with a dryer; the proton exchange resin solution L2 was coated on the microporous polytetrafluoroethylene reinforced membrane, and then covered with a thinner microporous polytetrafluoroethylene reinforced membrane (containing 10% ceria CeO2) with a thickness of about ~ 3 microns, being dried with a dryer; then the proton exchange resin solution L8 was coated on the polytetrafluoroethylene reinforced membrane, being dried with a dryer again, finally put it in an oven at 120 degrees, for baking 5 minutes, taken out and cooled down, the fluorine-containing proton exchange membrane can be peeled off from the release membrane 1B without any visible residue on the release membrane, the peeled fluorine-containing proton exchange membrane is flat with a thickness of about ~28 microns, the tensile strength, TD and MD, are all at 80 to 90 MPa, the room temperature proton/ion conductivity (Ionic Conductivity) is greater than 0.012 (S/cm), and the time required for 100 ml of air to pass through the composite membrane by using a Gurley densometer is more than 15 minutes. Suitable for fuel cell membrane electrode applications.

### Comparative Example 1 (PET original membrane, without any release agent, one layer of microporous reinforced membrane)

PET (CAS: 25038-59-9) original membrane, without any release agent on the surface. The proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) is about 830]; 40% ethanol; 40% water) was coated on a PET original membrane without any release agent with a thickness of about 25 microns, then covered with a microporous polytetrafluoroethylene reinforced membrane with a thickness of about 8 to 9 microns, being dried with a dryer; then the same proton exchange resin solution was coated on a microporous polytetrafluoroethylene reinforced membrane, being dried with a dryer again; finally put it in an oven at 120 degrees for baking 5 minutes, taken out to cool down, the fluorine-containing proton exchange membrane cannot be peeled off from the original PET membrane, and it cannot be peeled off smoothly even after soaking in water. PET is the most common release membrane material on the market, it is also the original membrane made of aromatic engineering plastics and does not contain any release agent, but the PET release membrane is not suitable for the production of fluorine-containing proton exchange membranes; however, the release membrane provided by the above example of the invention, such as 1A, 1B, 1C, can have the performance suitable for successful application, and the result is unexpected.

### Comparative Example 2 (PET original membrane, without any release agent, with corona, one layer of microporous reinforced membrane)

PET (CAS: 25038-59-9) original membrane, without any release agent on the surface, but with corona. The proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) is about 830]; 40% ethanol; 40% water) was coated on a PET original membrane with corona with a thickness of about 25 microns, casting slurry has good flatness; then covered with a microporous polytetrafluoroethylene reinforced membrane with a thickness of about 8 to 9 microns, being dried with a drier; then the same proton exchange resin solution was coated on a microporous polytetrafluoroethylene reinforced membrane, being dried with a dryer again; finally put it in an oven at 120 degrees for baking 5 minutes, taken out to cool down, the fluorine-containing proton exchange membrane cannot be peeled off from the original PET membrane with corona, and it cannot be peeled off smoothly even after soaking in water. PET is the most common release membrane material on the market, it is also the original membrane made of aromatic engineering plastics and does not contain any release agent, but the PET release membrane is not suitable for the production of fluorine-containing proton exchange membranes; however, the release membrane provided by the above example of the invention, such as 1A, 1B, 1C, can have the performance suitable for successful application, and the result is unexpected.

### Comparative Example 3 (PET release membrane containing silicon release agent, one layer of microporous reinforced membrane)

The traditional release membrane is mostly made of PET (CAS: 25038-59-9), with corona and release agent, such as silicon-containing or fluorine-containing release agent. The proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) is about 830]; 40% ethanol; 40% water) was coated on a PET release membrane containing a silicon release agent with a thickness of about 25 microns, casting slurry has poor flatness and being with cohesion; then covered with a microporous PTFE reinforced membrane with a thickness of about 8 to 9 microns, being dried with a dryer; and then the same proton exchange resin solution was coated on the microporous PTFE reinforced membrane, being dried with a dryer again; finally put it in an oven at 120 degrees, for baking 5 minutes, taken out to cool down, the fluorine-containing proton exchange membrane can be peeled off from the (PET/silicon) release membrane smoothly without residual on the release membrane, the peeled fluorine-containing proton exchange membrane has a thickness of about 10 to 18 microns, and the flatness is poor; Infrared IR analysis is used to analyze the membrane surface and there are residual silicon-containing pollutants. This type of release membrane is also not suitable for the production of high-quality proton exchange membranes.

### Comparative Example 4 (PET release membrane containing fluorine release agent, one layer of microporous reinforced membrane)

PET release membrane with fluorine-containing release agent on the surface. The proton exchange resin solution S1 (weight ratio: about 20% [tetrafluoroethylene and CF₂=CF-O-CF₂CF₂-SO₃H fluorine-containing proton exchange resin copolymer, its acid equivalent weight(meq/g) is about 830]; 40% ethanol; 40% water) was coated on the PET release membrane containing fluorine release agent with a thickness of about 25 microns, casting slurry has good flatness; then covered with a microporous PTFE reinforced membrane with a thickness of about 8 to 9 microns, being dried with a dryer; then the same proton exchange resin solution was coated on the microporous PTFE reinforced membrane, being dried with a dryer again; finally put it in an oven at 120 degrees, for baking 5 minutes, taken out to cool down, the fluorine-containing proton exchange membrane cannot be peeled off from this (PET/fluorine) release membrane, and can be barely peeled off after soaking in water; the fluorine-containing proton exchange membrane has a thickness of about 13 to 16 microns, and the surface is damaged in some places. This release membrane is also not suitable for making high-quality proton exchange membranes.

The above examples and comparative examples, it is obviously to find out that the special release membrane without a release agent used in the present invention, used to prepare the composite membrane of special highly enhanced fluorine-containing proton or ion exchange membrane, composite membrane electrode or fluorine-containing chlor-alkali battery membrane, has better performance than the composite thin membrane made of the traditional release membrane with a release agent.

Those skilled in the art can make various corresponding changes and modifications based on the above technical solutions and conceptions, and all these changes and modifications should be included within the protection scope of the claims of the present invention.

## Claims

1. A composite membrane of a special highly enhanced fluorine-containing proton or ion exchange membrane, comprising at least two layers of microporous reinforced membranes, wherein both sides of each layer of microporous reinforced membranes are filled with fluorine-containing proton or ion exchange resin, and the weight ratio of the microporous reinforced membranes to fluorine-containing proton or ion exchange resin is 5:95 to 40:60; the thickness of the composite membrane is 1 micron to 300 microns; the biaxial tensile strength of the composite membrane is greater than 40MPa, its room temperature ion conductivity is greater than 0.007S/cm, the air permeability is extremely low, and the time required for 100 milliliters of air to pass through the composite membrane measured by Gurley densometer is more than 5 minutes.

2. The composite membrane of a special highly enhanced fluorine-containing proton or ion exchange membrane according to claim 1, the weight ratio of the microporous reinforced membranes to fluorine-containing proton or ion exchange resin is 10:90 to 30:70; or a total weight of the composite membrane is 2 to 500 g/m².

3. A composite membrane electrode of a special highly enhanced fluorine-containing proton or ion exchange membrane, being applied to a battery diaphragm, comprising at least two layers of microporous reinforced membranes, wherein both sides of each layer of microporous reinforced membranes are filled with fluorine-containing proton or ion exchange resin, and a weight ratio of the microporous reinforced membrane to fluorine-containing proton or ion exchange resin is 5:95 to 40:60; the weight ratio of the microporous reinforced membrane to fluorine-containing protons or ion exchange resin is 10:90 to 30:70; the special highly enhanced fluorine-containing proton or ion exchange membrane electrode has a total weight of 2 to 500 g/m², and a thickness of 1 micron to 300 microns; the biaxial tensile strength of the composite membrane electrode of the special highly enhanced fluorine-containing proton or ion exchange membrane is greater than 40 MPa, its room temperature ion conductivity is greater than 0.007 S/cm, the air permeability is extremely low, and the time required for 100 milliliters of air to pass through the composite membrane electrode measured by Gurley densometer is more than 5 minutes.

4. A special highly enhanced fluorine-containing chlor-alkali battery membrane, comprising at least two layers of microporous reinforced membranes, wherein both sides of each layer of microporous reinforced membranes are filled with fluorine-containing proton exchange resin or ion exchange resin, the weight ratio of the microporous reinforced membranes to fluorine-containing proton exchange resin or ion exchange resin is 5:95 to 40:60; the special highly enhanced fluorine-containing chlor-alkali battery membrane has a total weight of 20 to 500 g/m², and a thickness of 10 micron to 260 microns; the biaxial tensile strength of highly enhanced fluorine-containing chlor-alkali battery membrane is greater than 40MPa, the room temperature ionic conductivity of the highly enhanced fluorine-containing chlor-alkali battery membrane is greater than 0.007S/cm, the air permeability rate of the highly enhanced fluorine-containing chlor-alkali battery membrane is measured by Gurley densometer, and the time required for 100 milliliters of air to pass through the composite membrane is more than 5 minutes.

5. The special highly enhanced fluorine-containing chlor-alkali battery membrane according to claim 4, the weight ratio of the microporous reinforced membranes to fluorine-containing proton or ion exchange resin is 10:90 to 30:70.

6. The membrane or electrode according to any one of claims 1 to 5, further comprising a special release membrane, the special release membrane is attached to the bottom layer of the composite membrane, the composition of the special release membrane is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; the engineering plastics containing hexa-fluoro-dimethyl bisphenol A as the main component is a polymer obtained by polymerization or copolymerization of hexa-fluoro-dimethyl bisphenol A, and its weight ratio is greater than 50%.

7. The membrane or electrode according to any one of claims 1 to 5, the microporous reinforced membrane has 2 to 50 layers.

8. The membrane or electrode according to any one of claims 1 to 5, microporous reinforced membrane has 2 to 30 layers.

9. The membrane or electrode according to claim 6, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

10. The membrane or electrode according to any one of claims 1 to 5, a dry weight of the microporous reinforced membrane is 0.5 to 30 g/m², an open porosity is 40% to 95%, a thickness is 0.5 to 30 microns, and a biaxial tensile strength is greater than 40 MPa.

11. The membrane or electrode according to any one of claims 1 to 5, a preparation method of the microporous reinforced membrane is:
melt spraying, wet spraying, wet phase change method, temperature difference phase change method, dry solvent method, electrospinning method or ultra-high-speed centrifugal spinning method are used for spraying, and nanometer or micron-sized fibers are evenly collected to form a random web microporous structure, which is annealed to form a microporous membrane, the resin used is thermoplastic fluorine-containing or chlorine-containing resin, carbon fiber precursor or resin that can be derived into carbon fiber; the microporous membrane is extruded in paste form and biaxially stretched.

12. The membrane or electrode according to claim 11, in a solution of the fluorine-containing proton exchange resin or ion exchange resin, one or more kinds of metal nanopowder, metal oxide nanopowder, carbon powder, graphite powder, graphene, rare metal powder are mixed, the total weight of which does not exceed 80% of the dry weight of the fluorine-containing proton exchange resin or ion exchange resin.

13. The membrane or electrode according to claim 12, the metal nanopowder comprises one of silver, platinum, palladium, or a platinum/carbon composite material, the metal oxide powder comprises one of zirconium dioxide or ceria.

14. A preparation method of the membrane or electrode according to any one of claims 1 to 5, the method comprises:
Step 1, cast coating one side of a special release membrane with a fluorine-containing proton exchange resin solution or a fluorine-containing ion exchange resin solution for impregnating;
step 2, covering the coated resin solution with a microporous reinforced membrane, so that the coated resin solution on the special release membrane is fully impregnated with the coated microporous reinforced membrane to obtain a composite membrane;
step 3, drying the composite membrane obtained in step 2;
step 4, cast coating the resin solution on the upper surface of the microporous reinforced membrane of the composite membrane, so that the cast coated resin solution is fully impregnated with the coated microporous reinforced membrane to obtain a composite membrane;
step 5, drying the composite membrane obtained in step 4.

15. The preparation method according to claim 14, cast coating the resin solution on the microporous reinforced membrane of the composite membrane obtained in step 2, allowing the upper and lower sides of the microporous reinforced membrane to be fully impregnated and filled with the resin solution to form a composite thin membrane, and then drying all the materials at one time.

16. The preparation method according to claim 14 or 15, on the composite membrane obtained in step 4, repeat step 2, step 3 and step 4 at least once.

17. The preparation method according to any one of claims 14 to 16, the pore volume of the microporous reinforced membrane filled by the fluorine-containing proton exchange resin solution or the fluorine-containing ion exchange resin solution is at least 60%-90%, preferably at least 80%.

18. A special release membrane without a release agent, the composition of the special release membrane without a release agent is selected from engineering plastics containing bisphenol A as a main component or engineering plastics containing hexa-fluoro-dimethyl bisphenol A as a main component; wherein the engineering plastics containing bisphenol A as the main component is a polymer obtained by polymerization or copolymerization of bisphenol A, and its weight ratio is greater than 50%; the engineering plastics containing hexa-fluoro-dimethyl bisphenol A as the main component is a polymer obtained by polymerization or copolymerization with hexa-fluoro-dimethyl bisphenol A, and its weight ratio is greater than 50%.

19. The special release membrane without a release agent according to claim 18, the polymer obtained by polymerization or copolymerization of bisphenol A is one of polycarbonate, polyphenylene ether, polysulfone resin, polyepoxy resin or their mixed copolymers; the polymer obtained by polymerization or copolymerization of hexa-fluoro-dimethyl bisphenol A is one of polycarbonate, polyphenylene ether, polysulfone resin, polyepoxy resin or their mixed copolymers.

20. The special release membrane without a release agent according to claim 18, the special release membrane without a release agent has a thickness of 10 to 500 microns, preferably 25 to 300 microns, a width of at least 100 mm, and being heat-resistant at 100°C without deformation.
